# EUROPEAN PATENT APPLICATION

(11) **EP 1 342 551 A1**
(43) Date of publication of application: **10.09.2003**
(21) Application number: 02388069.3
(22) Date of filing: 07.10.2002
(51) Int. Cl.: B29C 65/32, B29C 65/18, H05B 6/14

(54) **Heat sealing device**

(30) Priority: 05.03.2002 US 87838
(71) Applicant: M-Tek, Inc., Elgin, Illinois 60123 (US)
(72) Inventor: Liakopoulos, Thomas W., Algonquin, Illinois 60102 (US)
(74) Representative: Sundien, Thomas

(57) **Abstract**

A device and method are described for heat sealing together portions of thermoplastic film (1,21), especially in packaging operations. Heat sealing of the films is carried out by applying heat and pressure using one or more inductively heated, moving platen (5,23,24). The platen (5,23,24) is heated uniformly in its entirety by passing through electromagnetic induction core (14).

## Description

### FIELD OF THE INVENTION

This invention is directed to a heat sealing device and method for continuously sealing together moving surfaces of heat sealable material. The device and method of the invention employ platens which are uniformly heated by induction heating using a source of electromagnetic energy which completely envelops a segment of the moving platen at a site remote from or proximate to the point of contact with and sealing of the material.

### BACKGROUND OF THE INVENTION

Polymeric films are increasingly used as convenient, inexpensive, air and water impermeable packaging materials.

The use of polymeric film materials which are thermoplastic, together with the inherent advantages of being able to heat seal these materials, has played a major role in the increasing use of heat sealed polymeric film packaging. An obvious advantage of heat sealing thermoplastic materials is that it provides an inexpensive airtight seal which is not available using other methods of closure. Further, heat sealing, while being a relatively efficient and inexpensive method for joining together thermoplastic films also avoids the use of adhesives which can contaminate the contents that are being enveloped by the thermoplastic film.

Generally, in a typical wrapping process using a thermoplastic film, each product is enclosed in a wrapper and the temperature of the wrapping material is raised at its edge margins to the optimum melting point for heat sealing purposes and compression applied to form the desired heat seal.

In heat sealing together multiple layers of thermoplastic film, in the described manner, there are three controlling considerations: (1) the temperature of the sealer bar or platen, which imparts the necessary heat to the thermoplastic film to form the heat seal; (2) the duration of contact between the heated sealer bar and the film; and (3) the pressure that the sealer bar exerts against the film.

In one type of operation, the sealer bars are typically made from heat conducting material such as metal and contain electrical resistance heating elements to heat the bar. Since the mass of the heating element is relatively small compared to the mass of the entire sealer bar, these sealers are slow to respond when it is desired to increase the heat of the sealer bar. The mass of the bar also precludes rapid cooling when input electrical energy is stopped.

Another technique which has been employed for heat sealing, uses a heated face on the sealer that is a low mass resistance heated band or wire. While more rapid heating and cooling are possible with this method, precise temperature control across the entire band is virtually impossible.

When sealing moving webs of thermoplastic film, the sealer bar may also be in the form of a heated roller, wheel or continuous band. The rotation speed of the sealer bar is matched to the speed of the web passing by the sealer bar, thus creating zero relative motion at the point where the sealer bar contacts the web. Machines using this technology must be capable of changing the web speed, whereupon the contact duration of the heat sealer against the film will also be changed. The only way to maintain a good heat seal is to proportionally change the sealer bar temperature as well. Because of the aforementioned slow heat change response of conventional sealing systems, throttling of the film web speed can only be done very gradually.

Electromagnetic inductance has been employed in heat sealing platens. However, such induction heating has typically been applied only to a selected portion of the platen thereby limiting the applied heating to that portion of the platen. In these systems, the heat is generated primarily only in the direct area to which the electromagnetic induction energy is applied, thereby necessitating placement of the induction heating source close by the area of the actual heat sealing operation. Particularly where moving belts or rotating bars are used for heat sealing, placement of the platen heat source close to the actual area of heat sealing contact can be inconvenient and inefficient.

It is, accordingly, an object of this invention to provide an improved heat sealing system and method in which the entire heat sealing platen is inductively heated at a location which can be remote from the point of sealing contact.

### BRIEF DESCRIPTION OF THE DRAWINGS

FIG. 1 is a bottom view illustrating a heat sealing device of the invention using a rotating sealer bar ring.
FIG 2. is a cross sectional top view illustrating the heat sealing device of the invention.
FIG. 3 is a cross sectional end view, illustrating the device shown in FIG. 2.
FIG. 4 is a perspective illustration of the sealing ring and electromagnetic inductor employed to heat the sealing ring in accordance with the invention.
FIG. 5 is a bottom view of the invention employing two moving opposed bands for heat sealing.
FIG. 6 is a cross sectional top view illustrating the device shown in FIG. 5.
FIG. 7 is a cross sectional end view schematically illustrating the device shown in FIG. 5.

### SUMMARY OF THE INVENTION

In accordance with the present invention, a method and apparatus are provided for continuously heat sealing together two opposing surfaces of heat sealable film. The apparatus of the invention comprises a plurality of rolls and guides for directing the opposing surfaces of the heat sealable material continuously between two moving, opposing contact surfaces for effecting heat sealing of the material by transferring heat to a portion of the material. At least one of the moving contact surfaces is the outer surface of a moving heat transfer structure which is heated by the moving structure passing through a source of electromagnetic induction energy. An important aspect of the present invention is that an entire segment of the heat transfer structure continuously passes through the electromagnetic inductor such that the entire structure is uniformly heated prior to contacting the heat sealable surfaces. The two opposing moving contact surfaces can, for example, be rings that are rotatably mounted or belts or combinations of these structures. For example, in one preferred embodiment of the invention, the contact surface that is heated by electromagnetic induction is a ring and the opposing surface is a continuously moving belt maintained in pressurized contact against the heat sealable material and heated contact surface of the ring.

The moving, heated contact surface passes through a source of electromagnetic induction energy which can be an electromagnetic coil such as a ferrite ring around which an electromagnetic coil is wound to produce the desired electromagnetic induction for heating the moving contact surface. Where the moving, heated contact surface is a ring, which rotates through the induction heating apparatus, the ring is supported internally by a plurality of mounted rollers. The non-heated opposing contact surface can be pressured against the heat sealable material and heated contact surface by a moving piston activated, for example, by pneumatic, hydraulic or electromagnetic means.

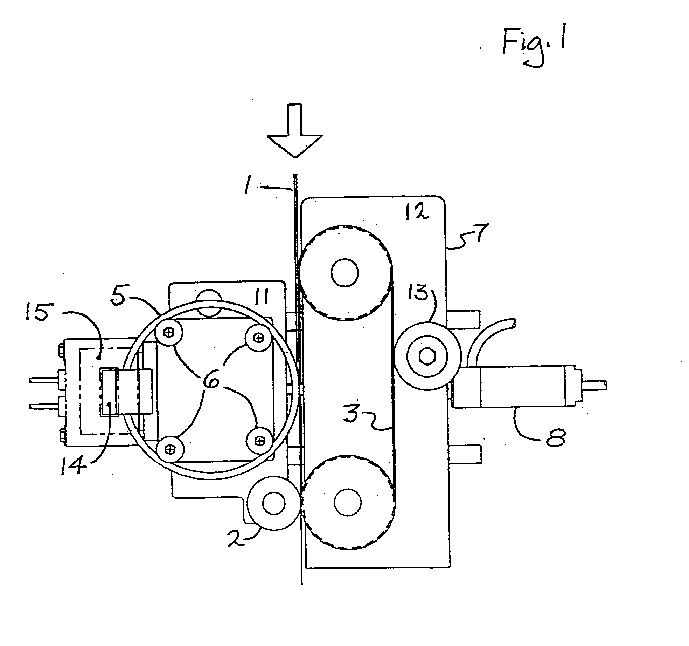

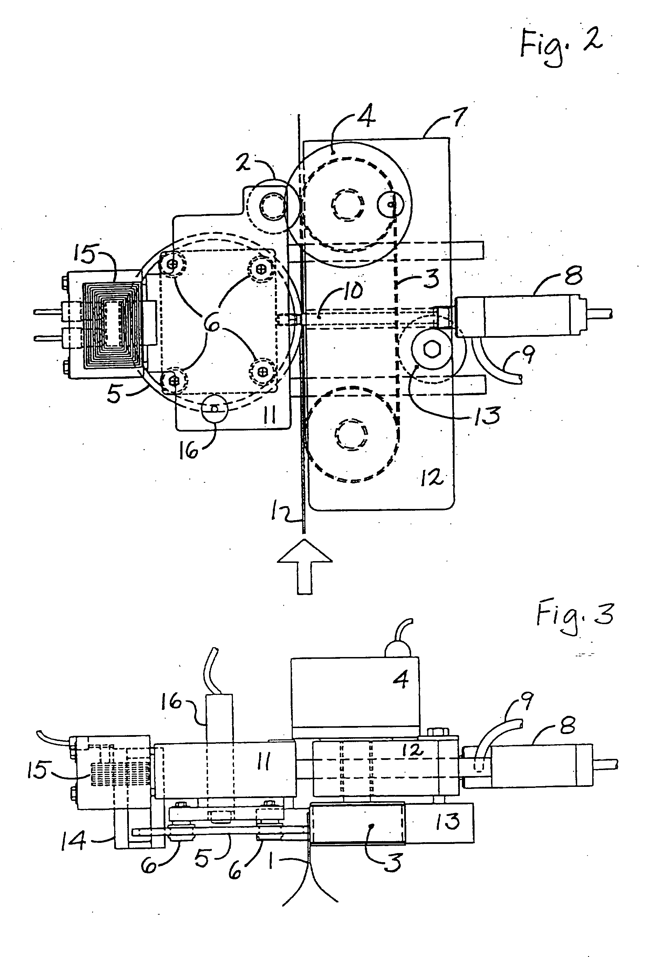

Reference will now be made in detail to the present preferred embodiments of the invention, examples of which are illustrated in the accompanying drawings. As illustrated particularly in FIGS. 1-3, a heat sealer 7 is shown into which two or more layers of thermoplastic film 1 enter. The heat sealer 7 essentially comprises a rotating inductively heated ring 5 which is mounted for rotation on four bearing rollers 6. The rotating ring 5 is heated by passing through a ferrite core 14 which is energized by the coil 15 connected to a source of electric energy. Opposing the heated sealing ring 5 is continuous rotating belt 3 which can, for example, be composed of silicone rubber.

In operation, two or more layers of thermoplastic film 1 enter the heat sealer 7 by being pulled forward by the grip roller 2, pressed against the rotating silicone rubber belt 3 that is driven by variable speed motor 4. By varying the rotational speed of the motor, the speed of the film passing through the sealing device 7 can be also varied.

The heat sealing ring 5 is pressed against the film 1 and the rotating belt 3. The sealer ring 5 rotates at the same surface speed as both the film 1 and the belt 3 because the ring turns freely on the four support bearings 6 and is pulled along by frictional contact with the moving film 1.

Pressure of engagement between both the grip roller 2 and sealing ring 5 against the moving belt 3 is controlled by pneumatic, hydraulic or electromagnetic cylinder 8 which is connected to an adjustable source of compressed air, water or electricity (not shown). Air pressure supplied through tube 9 pulls the cylinder rod 10 into the cylinder 8 thereby pulling structural plate 11 toward structural plate 12. Since the grip roller 2 and sealing ring 5 are mounted on structural plate 11, they are pulled against the moving belt 3, which is mounted on structural plate 12. Tension on the moving belt 3 is adjusted with a movable tension roller 13 that can slide perpendicularly to the moving belt.

It will particularly be noted that support of the heated sealing ring by the four bearings 6 provides precise location of the sealing ring 5 without the need for spokes or other supporting structure radiating outward from a central hub. This in turn makes it possible to completely surround a segment of the rotating sealing ring with a electromagnetic core 14. A coil 15 of electrically conductive wire is wrapped around the core 14. When alternating electrical current is passed through the coil 15, the sealing ring 5 is heated by electromagnetic induction.

An optical heat sensor 16 continually measures the heat of the sealing ring and the information is processed by electronically controlled devices (not shown) which modulate the electric current passing through the coil 15 thereby controlling the temperature of the sealing ring 5.

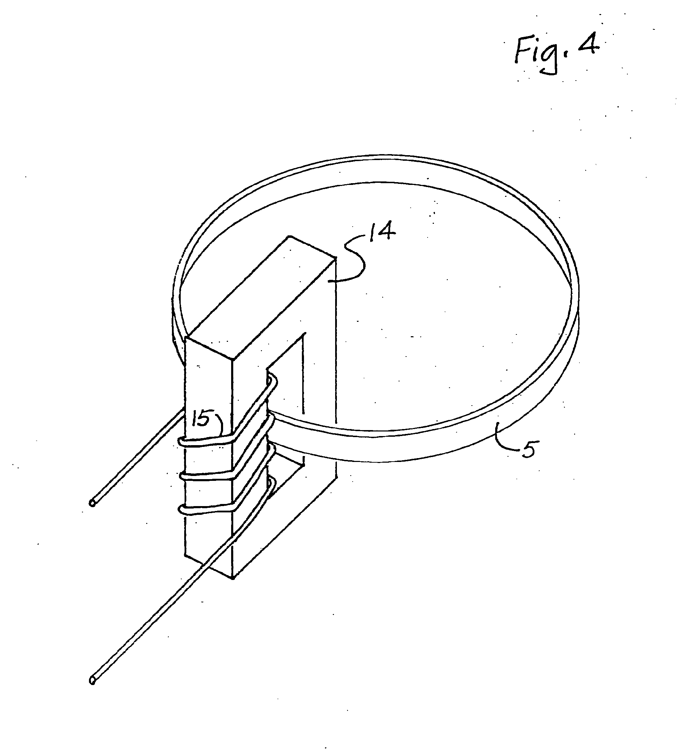

FIG. 4 illustrates in greater detail, the relationship of the rotating ring 5, which continuously passes through the ferrite core 14 which is energized by the coil 15 of electrically conductive wire wrapped around core 14.

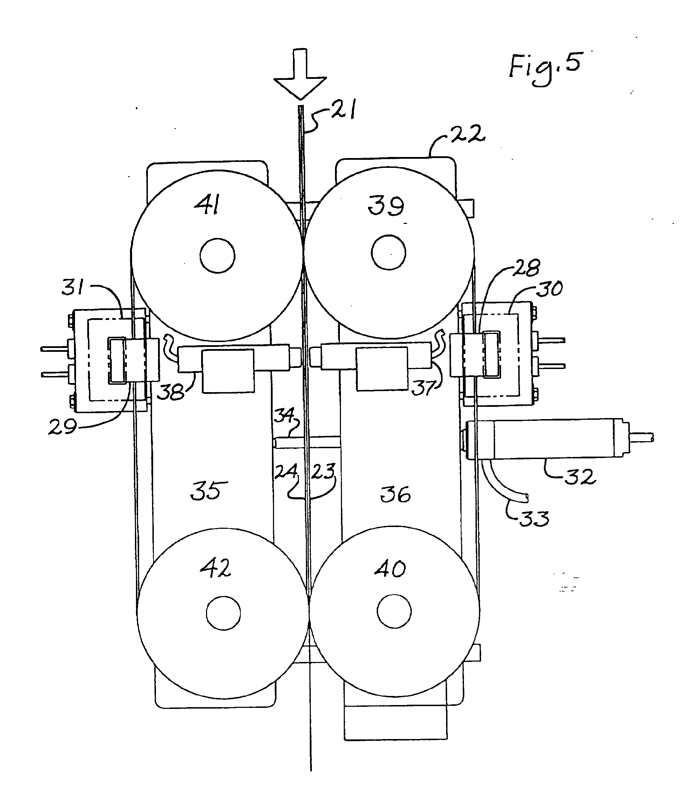

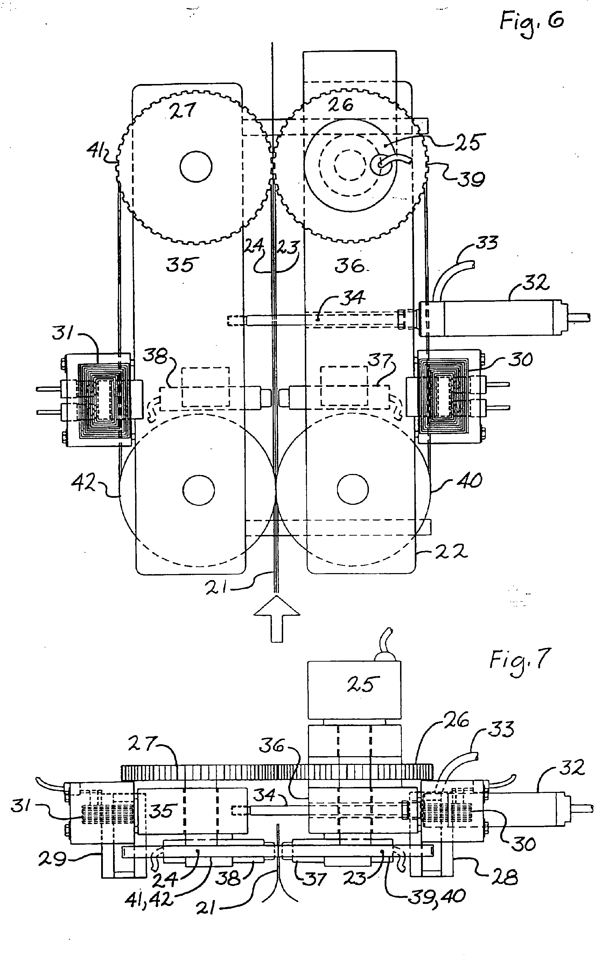

FIGS. 5, FIG 6. and FIG. 7 illustrate an alternative embodiment of the invention which utilizes two continuously moving metal belts rather than a metal ring.

In this embodiment of the invention, the film 21 enters the sealer 22 by being pulled between the two continuously moving belts 23 and 24. Belt 23 is directly driven by a variable speed motor 25, through pulleys 39 and 40. A gear 26 is also driven by this motor, and by meshing with gear 27, belt 24 is driven at the same speed, and in the same direction as belt 23, through pulleys 41 and 42.

Belts 23 and 24 are made of metal. Each belt passes through ferrite core 28 or 29. The ferrite core completely encircles that portion of the belt which passes through it and thus uniformly heats the entirety of each belt, by electromagnetic induction.

Optical heat sensors 37 and 38 continually measure the temperature of each belt, and the information is processed by eletronically controlled devices (not shown), which modulate the electric current passing through each coil 30 and 31 thereby individually controlling the temperature of each belt.

Pressure of engagement between belts 23 and 24 is controlled by a pneumatic, cylinder 32 which is connected to an adjustable source of compressed air (not shown). Air pressure supplied through tube 33 pulls the cylinder rod 34 into the cylinder 32 thereby pulling structural plate 35 toward structural plate 36. Since belt 24 is mounted on structural plate 35 it is pulled against the belt 23 mounted on structural plate 36. In this preferred embodiment of the invention, the cylinder 32 is pneumatic and activated by compressed air. However, it should be understood that the cylinder 32 could also by hydraulic and activated by compressed liquid, or electromagnetic and activated by electricity.

As heretofore noted, in accordance with the invention, the entire heat sealer ring or belt is heated by electromagnetic coupling in a transformer effect. Accordingly, the heating core or coil can be located anywhere around the perimeter of the heated sealing ring or belt since heat is thereby created through the entire structure and is not localized as in configurations where the heating element only partially encloses or contacts the heating ring or belt.

In order to be heated appropriately by the induction cores, the heated ring or band must be made of electrically conductive material.

It will be appreciated that various structures and configurations can be employed for the system applying inductive heating energy to the moving heat sealing ring or belt. As illustrated, for example, a ferrite core around which an electromagnetic coil is disposed can be employed to provide the required inductive heating of the entire belt or ring. Other modifications and details of construction will be apparent to those of ordinary skill in the art.

It will further be apparent to those skilled in the art that various modifications and variations can be made in the heat sealing device and method of the present invention without departing from the spirit or scope of the invention. Thus, it is intended that the present invention cover the modifications and variations of this invention provided they come within the scope of the appended claims and their equivalents.

## Claims

1. An apparatus for heat sealing together two opposing surfaces of heat sealable material comprising:
a plurality of rolls and guides for directing said opposing surfaces in continuous linear movement between moving opposing contact surfaces for effecting said heat sealing by transferring heat to at least a portion of said material;
at least one of said moving contact surfaces being the outer surface of a moving heat transfer structure;
said entire heat transfer structure being heated by electromagnetic induction induced by said moving structure passing through a source of electromagnetic induction.

2. The apparatus of claim 1 wherein said moving heat transfer structure is a ring.

3. The apparatus of claim 1 wherein said moving heat transfer structure is a belt.

4. The apparatus of claim 1 wherein there are two moving, opposing contact surfaces, one of which is the outer surface of a heat transfer structure.

5. The apparatus of claim 1 wherein said source of electromagnetic induction is an electromagnetic coil through which said moving structure passes.

6. The apparatus of claim 1 wherein said source of electromagnetic induction is a ferromagnetic core of an electromagnet through which said moving structure passes.

7. The apparatus of claim 5 wherein said electromagnetic coil surrounds a portion of a ferrite coil through which said moving structure passes.

8. The apparatus of claim 1 wherein at least one of said opposing contact surfaces is pressured against the other.

9. The apparatus of claim 8 wherein at least one of said opposing contact surfaces is pressured by pneumatic, hydraulic or electromagnetically activated piston.

10. The apparatus of claim 1 wherein said heat transfer structure moves through said source of electromagnetic induction heating continuously such that a portion thereof is completely surrounded by said source to impart said heating to the entire structure.

11. The apparatus of claim 1 wherein one of said moving contact surfaces is a belt and the other is a ring having said heated contact surface.

12. The apparatus of claim 1 wherein both of said moving contact surfaces are belts, at least one of which has said heated contact surface.

13. The apparatus of claim 1 wherein both of said moving contact surfaces are rings, at least one of which has said heated contact surface.

14. The apparatus of claim 2 wherein said ring is internally supported for rotation by a plurality of spaced roller engaging the inner periphery thereof.

15. The apparatus of claim 1, wherein there are heat sensors which measure the temperature of the moving contact surfaces and means responsive to said heat sensors which modulate the electromagnetic heating.

16. The apparatus of claim 15 wherein the heat sensors are optical heat sensors.

17. The apparatus of claim 15, wherein the said means to control electronically modulate the electric current passing through the source of electromagnetic induction.
